# EUROPEAN PATENT APPLICATION

(11) **EP 2 613 211 A2**
(43) Date of publication of application: **10.07.2013**
(21) Application number: 13150180.1
(22) Date of filing: 03.01.2013
(51) Int. Cl.: G05B 23/02

(54) **Device and method for monitoring process controller health**

(30) Priority: 05.01.2012 US 201213344295
(71) Applicant: General Electric Company, Schenectady, New York 12345 (US)
(72) Inventor: Phelps, Mark Robert, Salem, VA 24153 (US)
(74) Representative: Picker, Madeline Margaret

(57) **Abstract**

A method to monitor health of a process controller. The method includes receiving, at a remote service computer, a limited set of diagnostic alarm data that relates to the health of the process controller. The limited set of diagnostic alarm data includes diagnostic alarm data that has been filtered based on a set of rules. The method also includes displaying the limited set of diagnostic alarm data to a user.

## Description

### BACKGROUND OF THE INVENTION

The subject matter disclosed herein relates to process controllers and, more specifically, to monitoring the health of a process controller.

Control systems are often used in conjunction with process systems, such as manufacturing or production processes, to regulate and/or monitor various operating parameters of the process. For instance, a control system may regulate the values of certain input parameters of the process in order to drive one or more target output parameters (e.g., flow rate, power output, etc.) to a desired value. Some control systems may also provide process data to an operator in the form of visual feedback, such as by outputting certain selected data points through a human-machine interface (HMI), which may include a graphical user interface displayed using a display device. This may enable the operator to monitor and assess the process performance parameters in substantially real time and, if necessary, take corrective actions if certain parameters are deviating from an expected range or norm.

Such control systems may use process controllers for controlling system operations and the process controllers may include a combination of hardware and software components. As may be appreciated, components of the process controller may not function as anticipated. Therefore, the components of the process controller may be monitored to identify potential problems that may occur. The monitoring system may provide alarm data (e.g., diagnostic alarm messages) to an operator to notify the operator about the potential process controller problems. However, such monitoring systems may provide large amounts of data that can be difficult to interpret. Further, the alarm data may include false alarms or repeating alarms that make it hard to determine where real problems are occurring.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system for monitoring health of a process controller includes a device configured to receive diagnostic alarm data that relates to the health of the process controller. The device is also configured to filter the diagnostic alarm data based on a set of rules resulting in a limited set of diagnostic alarm data. The device is configured to provide the limited set of diagnostic alarm data to a remote location.

In a second embodiment, an article of manufacture for a health monitoring system includes one or more tangible, machine-readable media having encoded thereon processor-executable instructions. The instructions include instructions to receive diagnostic alarm data that relates to health of a process controller. The instructions also include instructions to filter the diagnostic alarm data based on a set of rules resulting in a limited set of diagnostic alarm data. The instructions include instructions to provide the limited set of diagnostic alarm data to a remote location.

In a third embodiment, a method for monitoring health of a process controller includes receiving, at a remote service computer, a limited set of diagnostic alarm data that relates to the health of the process controller. The limited set of diagnostic alarm data includes diagnostic alarm data that has been filtered based on a set of rules. The method also includes displaying the limited set of diagnostic alarm data to a user.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 illustrates a block diagram of an embodiment of a process controller health monitoring system;
FIG. 2 illustrates a flow chart of an embodiment of a method for monitoring the health of a process controller; and
FIG. 3 illustrates a flow chart of an embodiment of a method for resolving health issues a process controller using a process controller health monitoring system.

### DETAILED DESCRIPTION OF EMBODIMENTS OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Further, the term "client" may refer to a computer (e.g., a processor and storage that allows execution and storage of machine-readable instructions to provide the functionality described herein) and/or computer processes running on such computers.

Present embodiments relate to systems that monitor health of a process controller (e.g., whether components of the process controller are functioning properly). The health monitoring systems include a device (e.g., computer and/or computer processes running on computers) in the system that receives diagnostic alarm data that relates to the health of the process controller. The device includes components (e.g., software and/or hardware) that filter the diagnostic alarm data based on a set of rules resulting in a limited set of diagnostic alarm data (e.g., false alarm data removed, duplicate alarm data removed, etc.). The device provides the limited set of diagnostic alarm data to a remote location (e.g., for analysis of the data and/or providing resolutions).

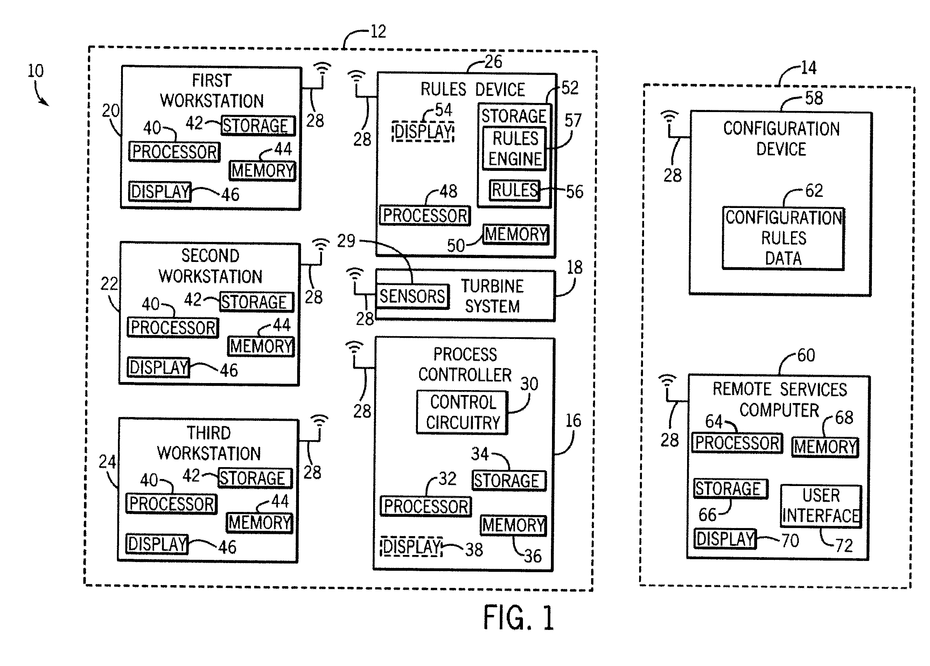

With the foregoing in mind, FIG. 1 illustrates a block diagram of an embodiment of a process controller health monitoring system 10. As illustrated, the health monitoring system 10 includes a utility plant system 12 having an on-site monitoring portion (e.g., physically located near a process controller 16) and a remote monitoring portion 14 (e.g., physically located remote from the process controller 16) for monitoring the health of the process controller 16. Specifically, the utility plant system 12 includes a process, such as operation of a turbine system 18, which is controlled by the process controller 16. Further, the utility plant system 12 includes a first workstation 20, a second workstation 22, and a third workstation 24 that each communicate with the process controller 16 and receive broadcast data from the process controller 16. As may be appreciated, the broadcast data may include information about the processes being performed, as well as diagnostic alarm data that relates to the health of the process controller 16. The utility plant system 12 also includes a rules device 26 (e.g., on-site monitoring portion) that receives diagnostic alarm data from one or more of the workstations 20, 22, and 24. The rules device 26 filters the diagnostic alarm data and provides the filtered data to the remote monitoring portion 14. As illustrated, the process controller 16, the turbine system 18, the workstations 20, 22, and 24, and the rules device 26 include a wireless antenna 28 for wireless communications. In other embodiments, the process controller 16, the turbine system 18, the workstations 20, 22, and 24, and the rules device 26 may communicate using a wired system or a combination of a wireless and a wired system.

In the illustrated embodiment, the turbine system 18 includes sensors 29 which provide feedback relating to the operation of the turbine system 18. The process controller 16 receives data from the sensors 29 and may also control the operation of the turbine system 18 (e.g., gas turbine system, steam turbine system, etc.). However, as may be appreciated, the process controller 16 may control any suitable type of process. For example, the process controller 16 may control operation of a utility system, a manufacturing plant, a boiler system, a water treatment system, a blowout preventer system (e.g., in a drilling system), and so forth. The process controller 16 operates using control circuitry 30 which may include various components. For example, the control circuitry 30 may include one or more controllers, printed circuit boards, switches, cables, or any suitable electronic component.

In addition, the process controller 16 includes a processor 32, storage 34, memory 36, and may include a display 38. Each of these devices may include hardware elements (including circuitry), software elements (including computer code stored on a computer-readable medium) or a combination of both hardware and software elements. It should be noted that the process controller 16 is merely one example of a particular implementation and is intended to illustrate the types of components that may be present in the process controller 16. It should also be noted that the processor 32 and/or other data processing circuitry may be generally referred to herein as "data processing circuitry." This data processing circuitry may be embodied wholly or in part as software, firmware, hardware, or any combination thereof. Furthermore, the data processing circuitry may be a single contained processing module or may be incorporated wholly or partially within any of the other elements within the process controller 16.

The processor 32 and/or other data processing circuitry may be operably coupled with the nonvolatile storage 34 and the memory 36 to execute instructions. Such programs or instructions executed by the processor 32 may be stored in any suitable article of manufacture that includes one or more tangible, computer-readable media at least collectively storing the instructions or routines, such as the nonvolatile storage 34 and the memory 36. The nonvolatile storage 34 and the memory 36 may include any suitable articles of manufacture for storing data and executable instructions, such as random-access memory, read-only memory, rewritable flash memory, hard drives, and optical discs. The display 38 may be any type of display for showing information, such as any device that may depict the status of processes being controlled by the process controller 16.

The control circuitry 30 and/or the processor 32 of the process controller 16 monitor the health of the components of the process controller 16. As such, the process controller 16 provides broadcast data that includes process controller 16 health data (e.g., data that may indicate a problem with a component of the process controller 16) as well as other process control data (e.g., data relating to the operation of the processes being controlled).

The workstations 20, 22, and 24 are configured to receive the broadcast data from the process controller 16 and to process and/or display portions of the broadcast data that relate to the particular workstation 20, 22, and 24 (e.g., the workstations 20, 22, and 24 may extract portions of the broadcast data, such as process controller 16 health data). To accomplish this, the workstations 20, 22, and 24 each include a processor 40, storage 42, memory 44, and a display 46. Further, the workstations 20, 22, and 24 may include a human machine interface (HMI) for an operator to use for displaying the broadcast data and/or communicating with the process controller 16. As may be appreciated, the process controller 16 health data (i.e., diagnostic alarm data) may be displayed by the workstations 20, 22, and 24. However, the process controller 16 health data may be presented in a format that makes the data hard to understand. Further, there may be large amounts of process controller 16 heath data which makes the data difficult to sort through and diagnose. For example, the process controller 16 health data may be presented with other broadcast data (e.g., data relating to the process being controlled) and the other broadcast data may appear to be more important to an operator. Therefore, in certain situations, the operator may ignore the process controller 16 health data because of these or other difficulties.

To decrease the amount of process controller 16 health data (i.e., diagnostic alarm data) and make the data easier to analyze, the diagnostic alarm data is sent to the rules device 26 for filtering. In certain embodiments, the rules device 26 receives diagnostic alarm data from the process controller 30. However, in other embodiments, the rules device 26 may receive diagnostic alarm data from one of the workstations 20, 22, and 24. Like the workstations 20, 22, and 24, the rules device 26 includes a processor 48, memory 50, storage 52, and may include a display 54. As may be appreciated, the processors 40 and 48, storage devices 42 and 52, memory 44 and 50, and displays 46 and 54 of the workstations 20, 22, and 24, and the rules device 26 may function in a similar manner to the respective components of the process controller 16 described above.

As illustrated, the storage 52 of the rules device 26 may include rules 56 that are used to filter the diagnostic alarm data (e.g., using thresholds, algorithms, or other logic). Further, the storage 52 may include a rules engine 57 which is used to receive diagnostic alarm data, filter the diagnostic alarm data based on the rules 56, and output filtered or limited diagnostic alarm data. The filtered or limited diagnostic alarm data may be limited to actionable diagnostic alarm data (e.g., data that can be used to take corrective action). It should be noted that, in certain embodiments, the storage 52 of the rules device 26 may include software for collecting or extracting data from the broadcast data of the process controller 30. In addition, in certain embodiments, the filtered diagnostic alarm data may be provided to the remote monitoring portion 14 where the filtered diagnostic alarm data may be analyzed. As may be appreciated, the rules 56 may include any suitable filtering rules that can be used to filter the diagnostic alarm data. For example, the rules 56 may include rules for filtering the diagnostic alarm data based on: a frequency that diagnostic alarm data is repeated (e.g., the rules may filter out diagnostic alarm data for an alarm that repeats more often than one time per minute, hour, day, week, etc.), a state of the process controller (e.g., startup, shutdown, normal operation, unknown), a group associated with the diagnostic alarm data (e.g., alarm data from a specific controller, alarm data that relates to certain types of components, alarm data that relates to a certain time period, a newly occurring alarm), a type of process controller being monitored (e.g., analog, digital), a feature related to a history of the diagnostic alarm data (e.g., a time that an alarm occurs, a recurring diagnostic alarm, an alarm that has previously been provided to the remote monitoring portion 14), whether the alarm is actionable (e.g., whether there is a resolution for the problem causing the alarm), and an expected alarm within the diagnostic alarm data (e.g., a known recurring alarm, a false alarm). The rules device 26 may receive the rules 56 as part of site configuration data that one or more of the workstations 20, 22, and 24 provide to the rules device 26. Further, in certain embodiments, the rules device 26 may receive the rules 56 as part of site configuration data from another source, such as from another portion of the rules device 26. Specifically, the site configuration data may include specific rules that apply to a specific process controller 16 being monitored and/or to a specific location of the process controller 16.

The remote monitoring portion 14 is used to transmit configuration data to the rules device 26 and to receive filtered diagnostic alarm data from the rules device 26. Specifically, the remote monitoring portion 14 includes a configuration device 58 and one or more remote services computers 60. Further, the configuration device 58 includes configuration rules data 62 which the configuration device 58 transmits to the rules device 26. Thus, the filtering rules 56 of the rules device 26 may include a combination of the configuration rules data 62 from the configuration device 58 and the rules from the site configuration data to form a combined set of rules 56 for filtering diagnostic alarm data. In certain embodiments, the configuration rules data 62 may include generic filtering rules that apply to diagnostic alarm data from any process controller 16 at any location (e.g., the filtering rules apply to multiple process controllers 16).

The remote services computer 60 receives filtered diagnostic alarm data from the rules device 26. Specifically, the remote service computer 60 includes a processor 64, storage 66, memory 68, and a display 70 for receiving and displaying the filtered diagnostic alarm data received from the rules device 26. As may be appreciated, the processor 64, the storage 66, the memory 68, and the display 70 may function in a similar manner to the respective components of the process controller 16 described above. The remote services computer 60 also includes a user interface 72 which may enable an operator to interact with the remote services computer 60 (e.g., view filtered diagnostic alarm data). As illustrated, the configuration device 58 and the remote service computer 60 include the wireless antenna 28 for wireless communications. In other embodiments, the configuration device 58 and the remote service computer 60 may communicate using a wired system or a combination of a wireless and a wired system. As may be appreciated, the components of the utility plant system 12 may communicate with the components of the remote monitoring portion 14.

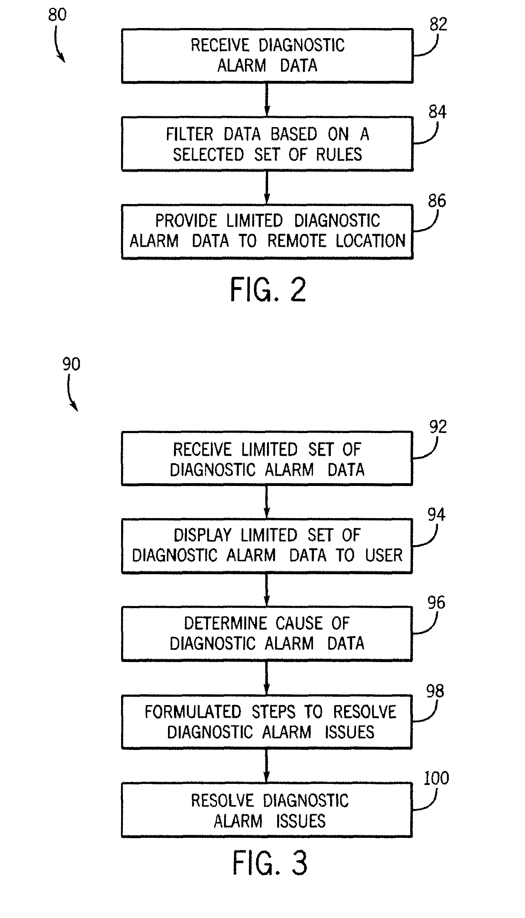

FIG. 2 illustrates a flow chart of a method for monitoring the health of a process controller 80 using the monitoring system 10 described in FIG. 1. During operation of the monitoring system 10, the process controller 16 broadcasts data that includes diagnostic alarm data (e.g., health data relating to components of the process controller 16). The workstations 20, 22, and 24 may extract data from the broadcast data based on the particular purpose and/or configuration of the workstation 20, 22, or 24 receiving the data. For example, one workstation 20, 22, or 24 may be used to monitor the operation of a combustion chamber of the turbine system 18 and, therefore, may extract data from the broadcast data that relates to the combustion chamber of the turbine system 18. As another example, another workstation 20, 22, or 24 may be used to monitor the operation of turbines within the turbine system 18 and, therefore, may extract data from the broadcast data that relates to the operation of turbines of the turbine system 18. Further, the workstations 20, 22, and 24 may extract diagnostic alarm data from the broadcast data. The workstations 20, 22, and 24 may use an HMI to display graphics relating to the process being controlled, control options, and alarms that relate to the process being controlled. Further, the alarms may include diagnostic alarm data that relates to the health of components within the process controller 16. In certain situations, an operator may not know how to respond to diagnostic alarm data that appears on the display of one of the workstations 20, 22, and 24. Further, there may be large amounts of diagnostic alarm data. For example, the diagnostic alarm data may include alarm data that repeats at a high frequency. Therefore, the workstations 20, 22, and 24 provide the diagnostic alarm data to the rules device 26.

At block 82, the rules engine 57 of the rules device 26 receives the diagnostic alarm data from the workstations 20, 22, and 24. As may be appreciated, in certain embodiments, the rules engine 57 may be configured to receive the diagnostic alarm data directly from the process controller 16, or from some other device, such as another device within the rules device 26. In other embodiments, the rules engine 57 may be directly built into the process controller 16. Next, at block 84, the rules engine 57 filters the diagnostic alarm data based on a selected set of rules 56. As previously described, the rules device 26 may receive the rules 56 from site configuration files provided to the rules device 26 by the workstations 20, 22, and 24, and/or the rules device 26 may receive the rules 56 from the configuration device 58. As may be appreciated, the rules device 26 may receive the rules 56 from another suitable source. Some or all of the rules 56 may be selected and applied to the diagnostic alarm data received by the rules engine 57. The rules 56 may apply any suitable logic to filter the diagnostic alarm data, as described above. At block 86, the rules engine 57 provides a limited or filtered set of diagnostic alarm data to a remote location (e.g., the remote monitoring portion 14 or the remote services computer 60). It should be noted that data may be transmitted and/or received by the various devices in the system 10 as the data is produced (e.g., not stored for later analysis, substantially real time). Further, the rules engine 57 may apply the rules 56 to the diagnostic alarm data as the engine 57 receives the data. Likewise, the filtered or limited diagnostic alarm data (e.g., actionable diagnostic alarm data) may be transmitted to the remote services computer 60 as soon as it has been filtered.

FIG. 3 illustrates a flow chart of a method for resolving health issues of a process controller using the process controller health monitoring system 10 described in FIG. 1. At block 92, the remote services computer 60 receives the limited or filtered set of diagnostic alarm data. Then, at block 94, the remote services computer 60 displays the limited or filtered set of diagnostic alarm data (e.g., actionable diagnostic alarm data) to a user or operator. Because the diagnostic alarm data has been filtered, there may be a significantly smaller amount of data displayed to the operator relative to the amount of diagnostic alarm data that was received by the rules engine 57 prior to the filtering.

Next, at block 96, the operator determines the cause of the diagnostic alarm data. The operator may use many different resources to determine the cause of the diagnostic alarm data. For example, the operator may analyze the operation of the process at the same time that the alarm was generated, or the operator may analyze what the process controller 16 was trying to do when the alarm was generated. Further, the operator may contact personnel located where the process controller 16 is located, remotely connect to the process controller 16 (e.g., via a network connection, using a network lockbox, remote services gateway, etc.), remotely look through historic or current diagnostic alarm data stored on the process controller 16, and remotely check the status of the process controlled by the process controller 16. The operator may also utilize technology experts to determine the cause of the diagnostic alarm data. At block 98, the operator formulates steps to resolve any issues with the portion of the process controller 16 that relates to the diagnostic alarm data. Then, at block 100, the health issues of the process controller 16 are resolved (e.g., such as by modifying software configurations, replacing hardware, etc.). For example, in certain embodiments, the operator may transmit instructions and/or send hardware for resolving the health issues to personnel located where the process controller 16 is located. In other embodiments, the operator may implement steps to resolve the health issues of the process controller 16 (e.g., by modifying software settings). As may be appreciated, prior to implementing steps to resolve the health issues of the process controller 16, the operator may contact personnel located where the process controller 16 is located to notify the personnel of the steps to be used.

Technical effects of the invention include the ability to apply filters to diagnostic alarm data that relates to the health of components of the process controller 16. The filters may remove redundant, unusable, expected, or other alarm data from diagnostic alarm data to make it easier to analyze. When an operator is able to analyze the diagnostic alarm data, the operator may also be able to resolve issues that relate to the health of components of the process controller 16. Thus, the diagnostic alarms can be used to improve the overall operation of the process controller 16.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A system (10) for monitoring health of a process controller (16) comprising:
a device configured to:
receive diagnostic alarm data that relates to the health of the process controller;
filter the diagnostic alarm data based on a set of rules (56) resulting in a limited set of diagnostic alarm data; and
provide the limited set of diagnostic alarm data to a remote location.

2. The system of claim 1, wherein the device is configured to receive broadcast data from the process controller (16) and extract diagnostic alarm data that relates to the health of the process controller from the broadcast data.

3. The system of claim 1 or claim 2, wherein the set of rules correspond to a specific process controller.

4. The system of claim 1, 2 or 3, wherein the set of rules (56) comprises rules configured to filter the diagnostic alarm data based on a frequency of the diagnostic alarm data, a group associated with the diagnostic alarm data, a type of process controller, or some combination thereof.

5. The system of any one of claims 1 to 4, wherein the set of rules (56) comprises rules configured to filter the diagnostic alarm data based on a state of the process controller.

6. The system of claim 5, wherein the state of the process controller comprises a startup state.

7. The system of any preceding claim, wherein the set of rules (56) comprises rules configured to filter the diagnostic alarm data based on a history of the diagnostic alarm data.

8. The system of claim 7, wherein the set of rules (56) comprises rules configured to filter out diagnostic alarm data when the history of the diagnostic alarm data indicates a recurring diagnostic alarm.

9. The system of any preceding claim, wherein the set of rules (56) comprises rules configured to filter the diagnostic alarm data to remove diagnostic alarm data that has previously been provided to the remote location.

10. A method for monitoring health of a process controller comprising:
receiving, at a remote service computer, a limited set of diagnostic alarm data that relates to the health of the process controller, wherein the limited set of diagnostic alarm data comprises diagnostic alarm data that has been filtered based on a set of rules; and
displaying the limited set of diagnostic alarm data to a user.

11. The method of claim 10, wherein the set of rules are configured to filter the diagnostic alarm data based on:
a group associated with the diagnostic alarm data; and/or
a type of process controller.

12. The method of claim 10 or 11, wherein the set of rules comprises:
rules configured to filter out diagnostic alarm data when a history of the diagnostic alarm data indicates a recurring diagnostic alarm; and/or
rules that are configured to filter the diagnostic alarm data to remove diagnostic alarm data that has previously been provided to the remote service center.

13. An article of manufacture for a health monitoring system comprising:
one or more tangible, machine-readable media having encoded thereon processor-executable instructions comprising:
instructions to receive diagnostic alarm data that relates to health of a process controller;
instructions to filter the diagnostic alarm data based on a set of rules resulting in a limited set of diagnostic alarm data; and
instructions to provide the limited set of diagnostic alarm data to a remote location.

14. The article of manufacture of claim 13, wherein the instructions to filter the diagnostic alarm data based on the set of rules comprises instructions to filter the diagnostic alarm data based on a state of the process controller, a history of the diagnostic alarm data, expected data in the diagnostic alarm data, or some combination thereof.

15. The article of manufacture of claim 13 or claim 14, wherein the instructions to filter the diagnostic alarm data based on the set of rules comprises instructions to filter the diagnostic alarm data based on a frequency of the diagnostic alarm data.

16. The article of manufacture of claim 13, 14 or 15, wherein the set of rules comprises rules that are configured to filter the diagnostic alarm data to remove diagnostic alarm data that has previously been provided to the remote location.

17. The article of manufacture of claim 13, 14, 15 or 16, wherein the set of rules comprises general configuration rules that correspond to multiple process controllers.
